# EUROPEAN PATENT APPLICATION

(11) **EP 3 569 048 A1**
(43) Date of publication of application: **20.11.2019**
(21) Application number: 19174350.9
(22) Date of filing: 14.05.2019
(51) Int. Cl.: A01D 34/86, A01D 57/20, A01D 34/43, A01D 34/535

(54) **FLAIL MOWER WITH PROTECTION DEVICE**

(30) Priority: 16.05.2018 IT 201800005424
(71) Applicant: Officina Meccanica B E G Srl, 06012 Città di Castello (PG) (IT)
(72) Inventor: Braganti, Emilio, 06012 Città di Castello (PG) (IT)
(74) Representative: Fanfani, Stefano

(57) **Abstract**

A shredding machine or flail mower for using in agriculture comprising a protection device for preventing any irrigation pipes laid on the ground to be shredded from getting damaged.

## Description

### Technical field

The present invention belongs to the sector of agricultural machines and machines used for maintaining parks and gardens.

The scope of the present patent application is a shredding machine, also known as flail mower, shredder or edge cutter, e.g. an agricultural machine, generally transported and moved by a tractor, which is used to cut down and grind vegetal residues, such as wild grass and field residues, so as to foster their decomposition or to make their subsequent collection, after packing, easier.

More specifically, the present patent application relates to a shredding head of an innovative type, which can also be used on grounds on which pipes, like those used for irrigation, lay.

### Present status of the art

Shredders or shredding heads are machines that in most cases are connected to a tractor which simultaneously displaces them on the ground and drives them by way of its own power take-off by way of its mechanical or hydraulic power take-off.

A shredding machine slides on the ground by leaning on specially designed sliding means, such as, for instance, a transversal roller which rolls on the ground and supports the shredding machine with the lower portion of which it is rotationally coupled. In order not to squash the vegetal material to be shredded, the transversal roller is usually placed behind the cutting device. Other solutions, for instance wheel-based solutions, are also possible. An example of such a shredder is shown in US 2010/0186361 A1. The shredding action must stop at a little distance from the ground level, in order to prevent the cutting devices, also called "knives", from crashing against stones, pebbles, or other roughnesses of the ground and consequently getting damaged.

In a shredder, it is usually possible to adjust the height of the cutting device with respect to the ground level, in order to adjust the height at which plants and shrubs should be shredded as well as to take account of the roughness present on the ground where the machine is going to operate on.

Cutting usually takes place thanks to the action exerted by high-speed rotary devices which also develop a sucking action onto the material. For this reason, the prior art shredding machines have a drawback in that they make irrigation pipes possibly present on the ground also lift from the ground; once a pipe is lifted from the ground, it frequently occurs that it enters the range of the cutting device and the latter causes its breakage, thus damaging the irrigation system.

A problem is thus felt of providing a shredding machine that can also be used in the presence of pipes laid on the ground without damaging them.

### Objects and summary of the invention

A first object of the present invention is thus to provide an innovative shredding machine, or flail mower, that allows to also operate on a ground where irrigation pipes are laid without causing damages to the latter.

A further object of the invention according to the present patent application is to implement a shredding machine wherein it is possible to adjust the cutting height with respect to the ground level and which is simultaneously capable of operating on grounds where pipes are laid. Another object of the present invention is to provide a device that is simple and cost-effective to manufacture and is also easy to operate and requires reduced maintenance. Other objects and functions of the present invention will become apparent to those skilled in this art upon reading the following description.

The above-mentioned objects are achieved by a shredding machine that comprises a body accommodating a cutting device and a lower slide which slides on the ground.

The cutting device is usually a horizontal shaft, mounted on the body transversally to the direction of forward motion; cutting elements, called knives or blades, extend out of the lateral surface of said shaft and their ends are tilted with respect to the axis of the radial element and define a cutting surface, which features a substantially cylindrical shape.

The body generally includes a wide opening to make the vegetal material enter, and the rear portion features an opening for discharging the shredded material.

The body is coupled with the lower slide and the coupling is very often vertically sliding, with locking means which also prevent the body from sliding even in a position intermediate between the top position and the bottom position, so as to allow to vary the distance of the body, and consequently of the rotor too, from the surface of the ground; this in order to adjust the vegetal material cutting height and to take account of the presence and dimensions of stones, pebbles, and other irregularities of the surface where the shredding machine is going to operate on.

In order to make the sliding of the lower slide on the ground easier, a solution is known consisting of rotationally coupling a transversal feeler roller, which supports the shredding machine and rolls on the ground immediately after this is processed, with the rear portion of the slide.

In other solutions, other types of equipment, such as, for instance, wheels and/or skid shoes and/or similar devices, variously combined with each other, are used as sliding and supporting means.

The problems of the prior art, which prevent the ability to operate on grounds where pipes are laid, are solved by rotationally coupling a further and innovative transversal protection roller with the lower slide of the shredder, which rolls on the ground and prevents the pipes that are laid thereon from getting sucked upwards by the sucking action exerted by the rotor of the cutting device.

The protection roller shall be located at least partially inside the vertical projection of the cutting device in order for it to be able to perform its function.

Preferably, the axis of rotation of the transversal protection roller is placed just behind the axis of rotation of the cutting device, in the longitudinal direction of the forward motion.

In order to maximize the ground locking effect exerted by the transversal protection roller on irrigation pipes, it is advisable that the outer surface be as close as possible to the cylindrical cutting surface, the latter being defined by the rotation of the cutting ends of the knives which radially extend out of the rotor of the cutting device. The distance between the surfaces allows the movement of the cutting device without the risk that the latter impacts with the transversal protection roller.

In a particularly highly-performing version of the invention, the longitudinal position of the transversal protection roller is adjustable along the direction of forward motion; this adjustment facility makes it possible to keep the surface of the protection roller as close as possible to the cutting surface, even when the body is made slide with respect to the lower slide in order to vary the cutting height.

### Brief description of the drawings

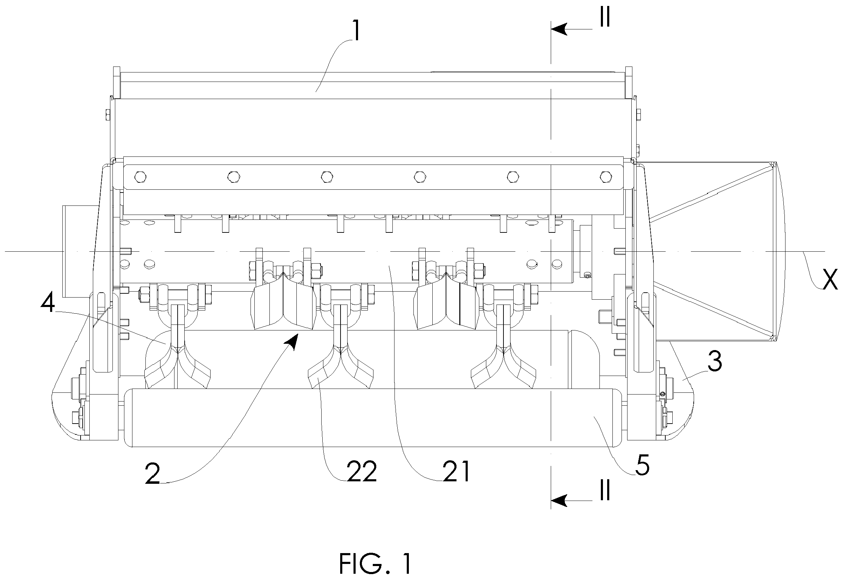

**Figure 1** shows a front view of a shredding machine; a cutting device (2) with a rotor (21) and knives (22) are visible inside a body (1); the lower part of the image shows a lower slide (3) which a transversal protection roller (5) and a transversal feeler roller (4) are rotationally coupled with, the transversal feeler roller being partially visible in the background. The figure also shows the trace of the cutting plane of the next figure and the horizontal axis (X) of the transversal rotor (21).

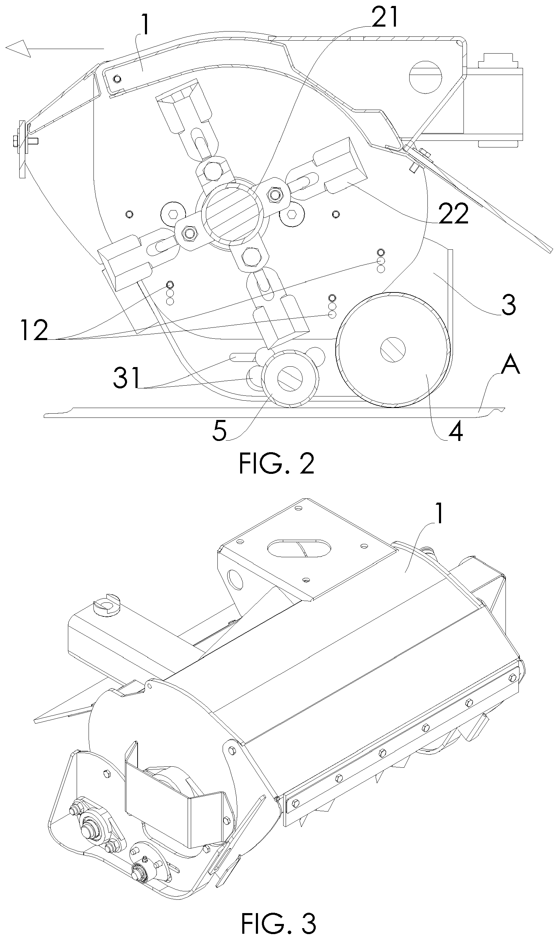

**Figure 2** shows a longitudinal cross section of the shredding machine; the points of fixation (12) visible in the body (1) make it possible a vertical sliding of the body (1) with respect to the lower slide (3), wherein slots (31) allowing a longitudinal sliding of the transversal protection roller (5) are visible. In the figure an arrow indicates the direction of forward motion; the figure also shows a piece of pipe (A).
**Figure 3** shows a perspective view of the shredding machine;
in the lower part of the figure a support of the transversal protection roller is visible along with longitudinal position adjustment devices.

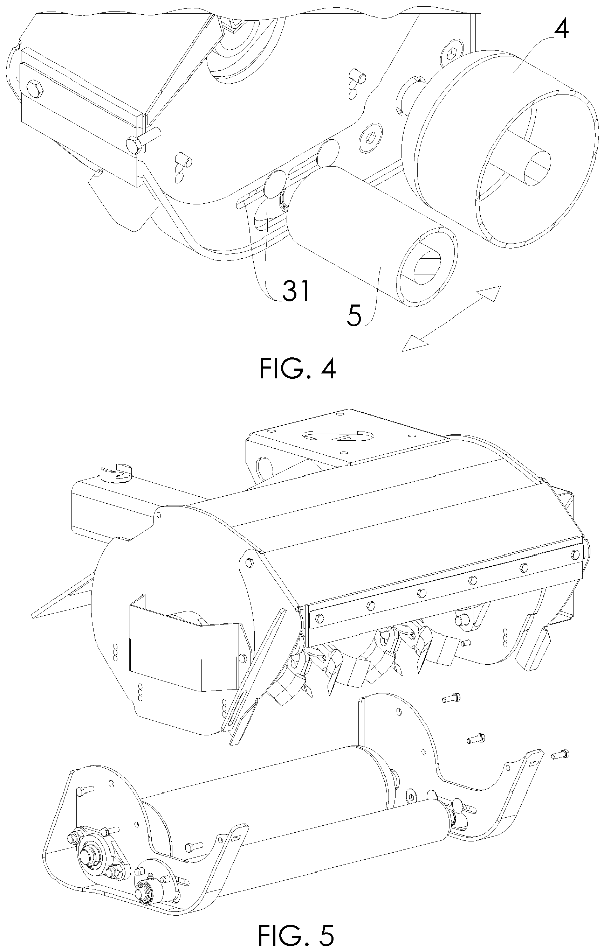

**Figure 4** shows a detail of the longitudinal adjustment devices of the transversal protection roller from inside the shredding machine. In the figure, a double arrow indicates the adjustment facilities of the protection roller (5).
**Figure 5** shows a view wherein the lower slide (3) is disconnected from the body (1).

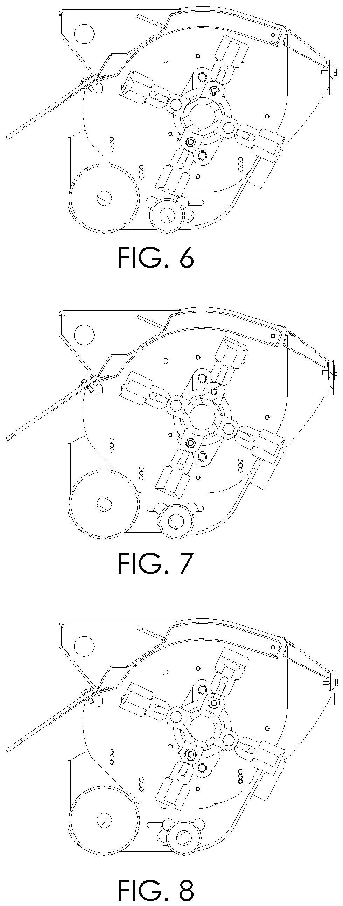

**Figures 6** thru **8** show one possible embodiment of the coupling between the body and the lower slide, so as to make it possible to vary the distance of the body, and consequently of the knives (22), from the ground. The figures sequentially show the positions taken by the locking means used to lock the vertical sliding in an upper, intermediate, and lower positions respectively; in the latter position the knives are spaced from the ground the most.

### Detailed description of one embodiment of the invention

In the particularly complete embodiment that is shown in the figures attached to the present patent application, a shredding machine comprises a body (1) slidingly coupled with a lower slide (3) underneath along a vertical axis. The front portion of the body (1) defines an opening whose width equals that of the shredding machine and reaches the ground; during its forward motion, vegetal material is introduced inside the shredding machine via this opening. The rear portion of the body (1) has a number of anchoring means on the top for anchoring it to the tractor that drives the shredding machine forward and includes an opening below, all along its width, for discharging the shredded material.

The vertical sliding of the body (1) with respect to the lower slide (3) can also be locked at intermediate positions; in the solution illustrated in the figures, the body (1) is such that all points of fixation (12) of the lower slide (3) are repeated at three different heights. The body (1) accommodates a cutting device (2) internally thereto, formed of a horizontal transversal rotor (21), which knives (22) radially protrude from and whose ends are bent to form an angle with respect to the radial axis of the knives (22), so as to define a cutting surface, the latter being substantially configured as a horizontal cylindrical surface. In its rear portion, the lower slide (3) comprises a transversal feeler roller (4), whereas a transversal protection roller (5) is placed in a more advanced position; both rollers roll on the ground and are rotationally coupled with the slide according to horizontal axes transversal to the direction of forward movement.

The position of the transversal protection roller (5) can be shifted along the longitudinal axis of the shredding machine by way of slots (31), in order to keep the lateral surface of the transversal protection roller (5) as close as possible to the cutting surface even when the height of the body (1) varies with respect to the slide (3).

In the embodiment illustrated in the attached figures, the diameter of the transversal protection roller (5) is smaller than the diameter of the transversal feeler roller (4) .

## Claims

1. A shredding machine comprising a body (1) which accommodates a cutting device (2) and is connected to a lower slide (3) which slides on the ground by leaning on sliding means, like wheels and/or skid shoes and/or a transversal feeler roller (4), **characterized in that** it further comprises at least one transversal protection roller (5), rolling on the ground and whose ends are rotationally coupled with the side portions of said lower slide (3) and **in that** said transversal protection roller (5) lies at least partially inside the vertical projection of said cutting device (2).

2. The shredding machine according to claim 1 **characterized in that** said sliding means of said lower slide (3) comprise at least one transversal feeler roller (4) placed behind said transversal protection roller (5).

3. The shredding machine according to claim 2 **characterized in that** the diameter of the transversal protection roller (5) is smaller than the diameter of the transversal feeler roller (4).

4. The shredding machine according to any of the previous claims **characterized in that** said body (1) is connected to said lower slide (3) by way of a vertically sliding coupling which comprises sliding locking means.

5. The shredding machine according to claim 4 **characterized in that** the points of fixation of said lower slide (3) to said body (1) are repeated at a plurality of different heights.

6. The shredding machine according to any of the previous claims **characterized in that** said cutting device comprises a transversal rotor (21), featuring a horizontal axis (X), from which blades (22) radially extend out, whose ends define a cylindrical cutting surface.

7. The shredding machine according to claim 6 **characterized in that** the outer surface of said transversal protection roller (5) is close to the rear portion of said cylindrical cutting surface.

8. The shredding machine according to claim 6 or 7 **characterized in that** the axis of rotation of the transversal protection roller (5) is placed just behind the horizontal axis of the transversal rotor (21), in the longitudinal direction of the forward motion.

9. The shredding machine according to any of the previous claims **characterized in that** the position of said transversal protection roller (5) is longitudinally adjustable.

10. The shredding machine according to claim 9 **characterized in that** the side portions of said lower slide (3) comprise longitudinal slots (31) internally to which the fixation means placed at the ends of said transversal protection roller (5) slide.
